# EUROPEAN PATENT APPLICATION

(11) **EP 3 594 524 A1**
(43) Date of publication of application: **15.01.2020**
(21) Application number: 18208189.3
(22) Date of filing: 24.11.2018
(51) Int. Cl.: F16D 65/00

(54) **RESTRICTION DEVICE FOR RESTRICTING BRAKE ROTOR FROM ROTATING DURING MAINTENANCE**

(30) Priority: 11.07.2018 TW 107123976
(71) Applicant: Jeoutay Liu Industrial Co., Ltd., 412 Taichung City (TW)
(72) Inventor: LIU, KYLE, 412 TAICHUNG CITY (TW); YOUZOU, ISHIHARA, 412 TAICHUNG CITY (TW)
(74) Representative: Cabinet Chaillot

(57) **Abstract**

A restriction device includes a connection portion and a locking portion. The connection portion has a protrusion so as to be connected to connection parts on a brake rotor. The locking portion has a base which is in contact with a brake caliper and restricts rotation of brake disk. The protrusion is rotated to be connected with one of the connection parts of the brake rotor, and a nut is used to secure the connection. When rotating the brake disk, the base is in contact with one end of the brake caliper to restrict the brake disk from rotating. Only one person is required remove the bolts.

## Description

### BACKGROUND OF THE INVENTION

### 1. Fields of the invention

The present invention relates to a restriction device installed to the brake rotor so as to restrict the brake rotor from rotating when maintaining the brake rotor.

### 2. Descriptions of Related Art

JP 2000-274511 discloses a differential which is connected to two axles that are respectively connected to two wheels. A set of gears secures the differential by bolts. The set of gears transfers the output energy from the engine to the differential so as to drive the wheels. JP2000-274511 provides a device that replaces the differential and includes a portion that is connected to the set of gears, and another portion that is connected to the axles so as to restrict rotation of the axles.

When the bolts are to be removed, the axles rotate freely, this requires one person to secure the brake rotor that is connected with the axle, and another person to remove the bolts. In other words, this task requires two persons to finish and therefore reduces the efficiency or work.

The present invention is intended to provide a device that is installed to the brake rotor so as to secure the brake caliper and the disk of the brake rotor to eliminate the drawbacks mentioned above.

### SUMMARY OF THE INVENTION

The present invention relates to a restriction device and comprises a connection portion and a locking portion, wherein the connection portion has a protrusion which is connected to connection parts on a brake rotor, and the locking portion has a base which is in contact with a brake caliper and to restrict rotation of brake disk. A bridge extends from the connection portion.

Preferably, the bridge is connected to the base.

Preferably, the bridge includes a first hole and a second hole defined therein. The first hole is located corresponding to the protrusion, and the second hole is located corresponding to the base. A locking member extends through the second hole.

The present invention requires only one person to remove bolts of the brake rotor.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the restriction device of the present invention;
Fig. 2 shows the wheel drive system of a vehicle;
Fig. 3 illustrates the brake rotor and brake caliper of a vehicle, and
Fig. 4 shows the restriction device of the present invention is installed to the brake rotor.

### DETAILED DESCRIPTION OF THE PREFERRED EMBODIMENT

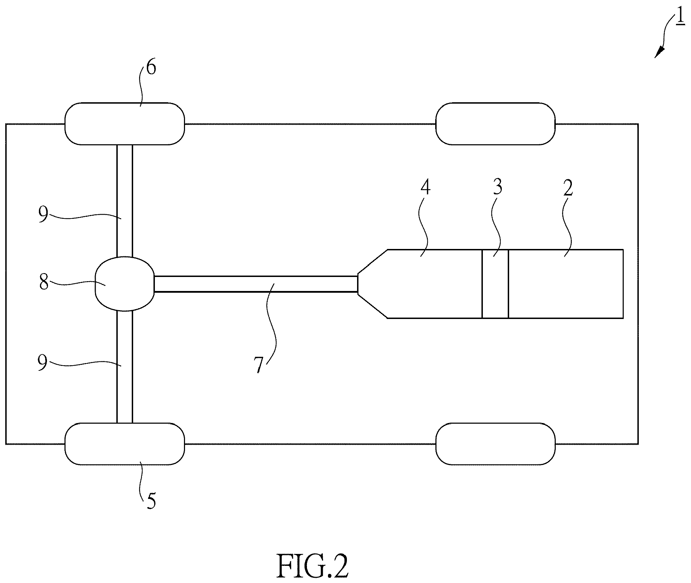

Referring to Fig. 2, the wheel drive system of a vehicle 1 includes an engine 2, a clutch 3, a drive shaft 7 and a transmission 4. A differential 8 is connected to the drive shaft 7, and the differential 8 is connected to two wheels 5, 6 by two axles 9.

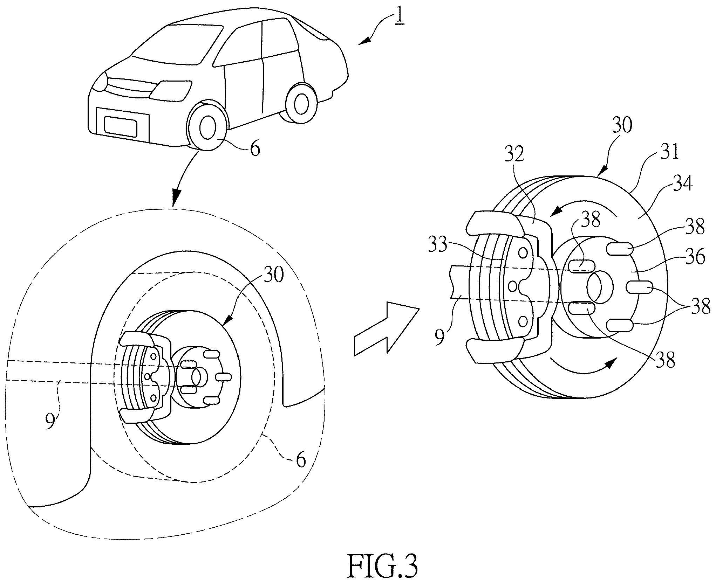

As shown in Fig. 3, each wheel 5/6 is cooperated with a brake rotor 30 which are driven by hydraulic cylinders to brake the vehicle 1. The output of the engine 2 is transferred to the drive shaft 7, and the differential 8 receives the power from the drive shaft 7 and drives the two axles 9 to rotate the two wheels 5, 6.

The brake rotor 30 as shown in Fig. 3 includes a brake disk 32 and brake pads 33 are used to stop the rotation of the brake disk 32. The brake disk 31 includes a hub 36 and a disk body 34 which is radially located corresponding to the brake caliper 32. The thickness of the hub 36 is larger than that of the brake disk 31. The brake caliper 32 is mounted to a portion of the brake disk 31 and the brake pads 33 are located between the brake disk 31 and the brake caliper 32 so that when the brake caliper 32 is activated, the brake pads 33 are moved to touch the brake disks 31 to stop the wheel 5/6. The hub 35 includes multiple connection parts 38 which include bolts and nuts.

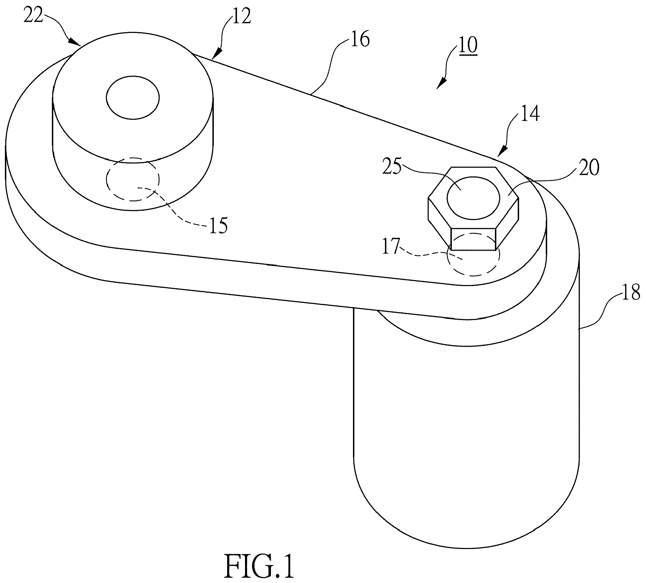

As shown in Fig. 1, the restriction device 10 of the present invention comprises a connection portion 12 and a locking portion 14. The connection portion 12 has a protrusion 22 which is adapted to be connected to the connection parts 38 on the brake rotor 30, and the locking portion 14 has a base 18 which is in contact with the brake caliper 32 and to restrict rotation of brake disk 31. A bridge 16 extends from the connection portion 12 and is connected to the base 18. The bridge 16 is an elongate board that has a certain thickness and includes a first hole 15 and a second hole 17 defined therein. The first hole 15 is located corresponding to the protrusion 22, and the second hole 17 is located corresponding to the base 18. The connection portion 12 is connected to one of the connection parts 38 on the hub 36.

The base 18 includes a locking member 25 which extends through the second hole 17 and is locked by a nut 20. When the brake disk 31 is restricted from rotating when the base 18 contacts the brake caliper 32.

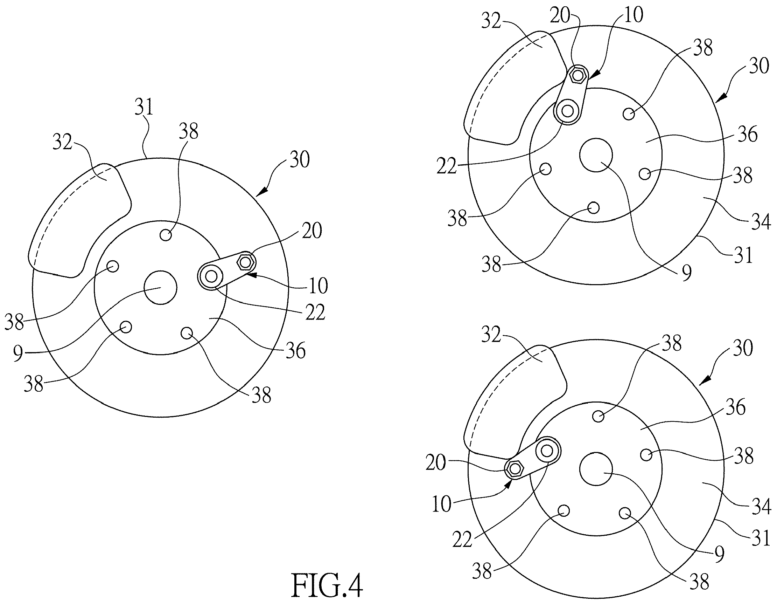

When unscrewing the bolts of the axle 9 and the differential 8, the axle 9 freely rotates and this may affect the maintenance processes. As shown in Fig. 4, when removing the bolts and nuts that connecting the center of the brake disk 31 to the axle 9, the brake disk 31 and the axle 9 rotate freely. Although the technician can use a wrench to control the rotation of the brake disk 31, but this is not an easy job. The same problem is expected when removing the bolts connecting the axle 9 and the differential 8. Therefore, it requires two technicians to do the task. On the contrary, only one technician is required when using the restriction device 10 of the present invention.

When using the restriction device of the present invention, the wheel IS removed and the connection parts 38 are exposed. The base 18 is put corresponding to the disk body 34, and the protrusion 22 is connected to one of the connection parts 38 and secured by a nut as shown in Fig. 4.

The bolts connecting the axle 9 and the differential 8 are then rotated, and the brake disk 31 is rotated an angle. The baes 18 then contacts the caliper 32, and the axle 9 and the brake disk 31 now do not rotate because of the base 18 contacting the brake caliper 32. The bolts can be easily unscrewed.

After the maintenance and the bolts are rotated in reverse direction to fasten the axle 9 to the differential 8, the brake disk 31 will rotate, the technician then shift the base 18 to the opposite direction so that the brake disk 31 is restricted from rotating, and the axle 9 does not rotate either. The bolts can be easily fastened and connected to the nuts. After the task is finished, the nut 20 on the connection portion 12 is removed, the restriction device 10 can then be removed from the brake disk 31. Only one technician is required when using the restriction device 10 of the present invention.

While we have shown and described the embodiment in accordance with the present invention, it should be clear to those skilled in the art that further embodiments may be made without departing from the scope of the present invention.

## Claims

1. A restriction device comprising:
a connection portion and a locking portion, the connection portion having a protrusion which is adapted to be connected to connection parts on a brake rotor, the locking portion having a base which is adapted to be in contact with a brake caliper and to restrict rotation of brake disk, and
a bridge extending from the connection portion.

2. The restriction device as claimed in claim 1, wherein the bridge is connected to the base.

3. The restriction device as claimed in claim 1, wherein the bridge includes a first hole and a second hole defined therein, the first hole is located corresponding to the protrusion, the second hole is located corresponding to the base, a locking member extends through the second hole.
